# EUROPEAN PATENT APPLICATION

(11) **EP 4 697 190 A1**
(43) Date of publication of application: **18.02.2026**
(21) Application number: 24787982.8
(22) Date of filing: 07.04.2024
(51) Int. Cl.: G06F 16/17

(54) **FILE PROCESSING METHOD AND APPARATUS, AND DEVICE AND STORAGE MEDIUM**

(30) Priority: 14.04.2023 CN 202310410411
(71) Applicant: Shenzhen TCL New Technology Co., Ltd., Shenzhen, Guangdong 518000 (CN)
(72) Inventor: CHANG, Cheng, Shenzhen, Guangdong 518000 (CN)
(74) Representative: Murgitroyd & Company
(86) International application number: PCT/CN2024/086301
(87) International publication number: WO 2024/212879

(57) **Abstract**

The present disclosure introduces a file processing method, apparatus, and device, and storage medium. By determining configuration parameters of file fragments, the fragment sequence positions of the file fragments is determined. Based on the fragment sequence positions of the file fragments, target positions of the file fragments in the target reserved area are determined. This approach ensures continuous writing of file fragments into the target reserved area, thereby alleviating internal file fragmentation issues.

## Description

The present disclosure claims the priority of the Chinese patent application titled "FILE PROCESSING METHOD AND APPARATUS, AND DEVICE AND STORAGE MEDIUM", with application number 202310410411.7, submitted to the China National Intellectual Property Administration on April 14, 2023, the entire content of which is incorporated herein by reference.

### TECHNICAL FIELD

The present disclosure generally relates to computer information storage technology, and in particular to a file processing method, apparatus, and device, and storage medium.

### BACKGROUND

Log-structure File Systems (LFS) have evolved into various file systems collectively referred to as LFS-type file systems, such as F2FS and NILFS. The main features of these file systems are the out-of-place update mechanism and checkpoint mechanism. Whether the underlying storage device is a mechanical hard disk or Flash-based storage device, the out-of-place update mechanism can significantly improve random write performance, hence such file systems are widely used in mobile smart devices.

A side effect of the out-of-place update mechanism is that, compared to other in-place update file systems, file updates in LFS-type file systems lead to file fragmentation, which significantly degrades sequential read and write performance.

### Technical Problem:

Existing methods mainly address fragmentation in structured file systems through garbage collection (GC) mechanisms. However, this mechanism only mitigates external file fragmentation and cannot resolve internal file fragmentation issues.

### SUMMARY

Accordingly, the present disclosure provides a file processing method and apparatus, device, and storage medium, in order to alleviate the internal fragmentation problem of structured file systems.

In one aspect, an embodiment of the present disclosure provides a file processing method. The method includes: acquiring a configuration parameter of a plurality of file fragments in a file to be processed, and determining a target reserved area for the file to be processed; determining fragment sequence positions of the plurality of file fragments based on the configuration parameter; determining a target position of each of the plurality of file fragments in the target reserved area based on the fragment sequence positions; and writing each of the plurality of file fragments to its corresponding target position in the target reserved area.

In another aspect, an embodiment of the present disclosure provides a file processing apparatus. The apparatus includes: an acquisition module, configured to acquire a configuration parameter of a plurality of file fragments in a file to be processed, and determine a target reserved area for the file to be processed; a fragment sorting module, configured to determine fragment sequence positions of the plurality of file fragments based on the configuration parameter; a fragmentation-sensitive file address mapping module, configured to determine a target position of each of the plurality of file fragments in the target reserved area based on the fragment sequence positions; and an internal anti-fragment collection module, configured to: write each of the plurality of file fragments to its corresponding target position in the target reserved area.

In another aspect, an embodiment of the present disclosure provides a file processing device. The device includes a memory and a process, wherein the memory stores application programs, which are executed by the processor to perform operations in the above method.

In another aspect, an embodiment of the present disclosure provides a storage medium. The storage medium stores multiple instructions adapted to be loaded by a processor to execute operations in the above method.

### Technical Effects:

Embodiments of the present disclosure provide a file processing method, apparatus, device, and storage medium, relating to the field of computer information storage technology. By obtaining a configuration parameter of the file fragments in a file to be processed and determining a target reserved area of the file to be processed, fragment sequence positions of the file fragments is determined according to the configuration parameters of the file fragments. A target position of each file fragment in the target reserved area is determined according to the fragment sequence positions of the file fragments. Each file fragment is written into the corresponding target location in the target reserved area. The embodiments of the present disclosure determine the fragment sequence positions of the file fragments based on the configuration parameter of the file fragments, and determine the target position of each file fragment in the target reserved area according to the fragment sequence positions of the file fragments, thereby ensuring that the file fragments written into the target reserved area are continuous, thus alleviating the file internal fragmentation issue.

### BRIEF DESCRIPTION OF THE DRAWINGS

In order to clearly explain the technical solutions in the embodiments of the present disclosure, the drawings used in the description of the embodiments will be briefly described below. Obviously, the drawings in the following description are merely some embodiments of the present disclosure. For those of ordinary skill in the art, other drawings may also be obtained based on these drawings without any creative work.
FIG. 1 is a schematic diagram of the remote update mechanism in related art.
FIG. 2 is a schematic diagram of the existing garbage collection mechanism in related art.
FIG. 3 is a schematic diagram of an embodiment of a file processing method provided by the present disclosure.
FIG. 4 is a schematic diagram of another embodiment of a file processing method provided by the present disclosure.
FIG. 5 is a schematic diagram of an embodiment of a method for determining internal fragment data provided by the present disclosure.
FIG. 6 is a schematic diagram of an embodiment of a method for determining a target reserved area of a file to be processed.
FIG. 7 is a schematic diagram of an embodiment of a method for determining target positions of file fragments in a target reserved area.
FIG. 8 is a schematic diagram of internal file fragmentation processing provided by the present disclosure.
FIG. 9 is a schematic diagram of another embodiment of a file processing method provided by the present disclosure.
FIG. 10 is a schematic diagram of another embodiment of a file processing method provided by the present disclosure.
FIG. 11 is a schematic diagram of another embodiment of a file processing method provided by the present disclosure.
FIG. 12 is a schematic diagram of an embodiment of a to-be-organized list update method.
FIG. 13 is a schematic diagram of a file writing structure file system provided by the present disclosure.
FIG. 14 is a schematic diagram of an embodiment of a file processing apparatus provided by the present disclosure.
FIG. 15 is a schematic diagram of an embodiment of a file processing device provided by the present disclosure.

### DETAILED DESCRIPTION

The disclosure will now be described in detail with reference to the accompanying drawings and examples. Apparently, the described embodiments are only a part of the embodiments of the present disclosure, not all of the embodiments. All other embodiments obtained by a person of ordinary skill in the art based on the embodiments of the present disclosure without creative efforts shall fall within the protection scope of the present disclosure.

As described in the background, under the out-of-place update mechanism, when a file fragment in a file stored in a structured file system is deleted, overwritten, or its parameters are updated, it may cause the file fragments in the file to become discontinuous and the free storage areas in the structured file system to become discontinuous, leading to internal file fragmentation and external file fragmentation. Here, internal file fragmentation manifests as discontinuous file fragments within the file, and external file fragmentation manifests as discontinuous free storage areas in the structured file system, i.e., fragmentation of the remaining space in the structured file system.

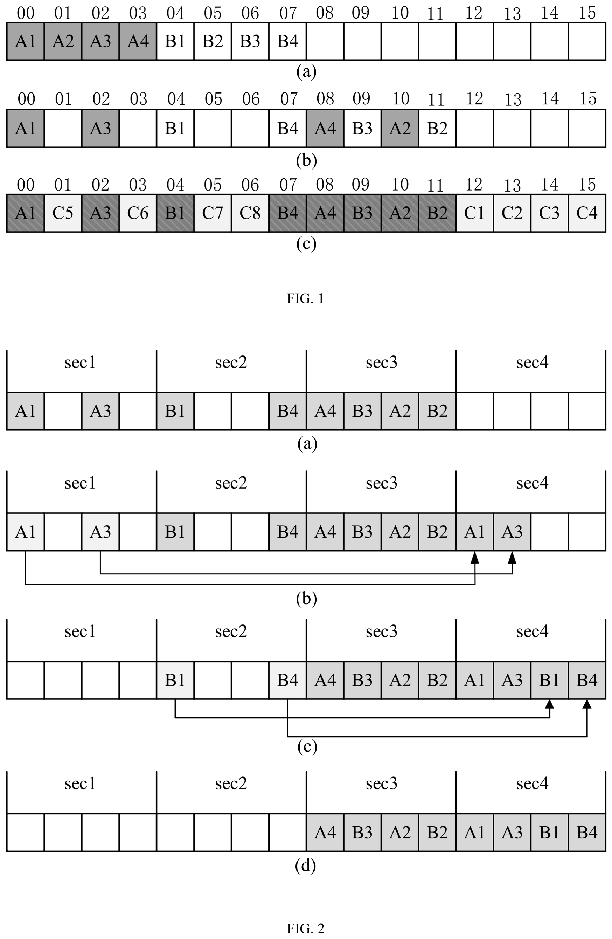

For example, FIG. 1 is a schematic diagram of an out-of-place update mechanism in related art. The file structure system shown in FIG. 1 includes 16 storage areas. As shown in subchart (a) of FIG. 1, in the initial state, File A includes four file fragments A1, A2, A3, and A4, and File A occupies 4 continuous storage areas in the file structure system. File B includes four file fragments B1, B2, B3, and B4, and File B occupies 4 continuous storage areas in the file structure system. The remaining space of the structured file system is continuous. When performing out-of-place updates on file fragments A2, B3, A2, and B2 in sequence, the updated file fragment A2 is written to free storage area 08, the updated file fragment B3 is written to free storage area 09, the updated file fragment A2 is written to free storage area 10, and the updated file fragment B2 is written to free storage area 11. At the same time, the file fragments stored in storage areas 01, 03, 05, and 06 are erased. As shown in subchart (b) of FIG. 1, the file fragments of File A and File B become discontinuous, resulting in internal file fragmentation. Moreover, the number of remaining storage areas in the structured file system remains unchanged, but these storage areas become discontinuous, leading to external file fragmentation. When sequential reading of File A and File B is required, the discontinuity of the file fragments increases the number of I/Os and overhead. Additionally, due to the out-of-order storage addresses of the file fragments of File A and File B, the performance of sequential-addressing storage devices degrades. When writing File C, which includes 8 file fragments, file fragment C1 is written to remaining storage area 12, C2 to area 13, C3 to area 14, and C4 to area 15. When writing file fragment C5, since there is no free storage area after area 15, it is necessary to traverse the storage areas of the structured file system to identify blank storage area 01, and write file fragment C5 to storage area 01. Similarly, file fragments C6, C7, and C8 are written in the same manner as C5. This increases the number of I/Os during file writing. As shown in subchart (c) of FIG. 1, the written file fragments of File C become discontinuous, resulting in internal file fragmentation.

To alleviate the fragmentation problem in structured file systems, existing technologies have designed a garbage collection mechanism. However, existing garbage collection mechanisms can only alleviate the fragmentation of the remaining space in structured file systems and cannot alleviate internal file fragmentation. For example, FIG. 2 is a schematic diagram of an existing garbage collection mechanism. As shown in subchart (a) of FIG. 2, in the existing garbage collection mechanism, the structured system file is divided into four storage sections: sec1, sec2, sec3, and sec4, each including 4 storage areas. File A and File B suffer from both external and internal fragmentation. As shown in subcharts (b) and (c) of FIG. 2, the existing garbage collection mechanism traverses each storage section and writes the data from the used storage areas in each section to a storage section with continuous free storage areas, making the remaining storage areas in the structured system file continuous. As shown in subchart (d) of FIG.2, after being organized by the garbage collection mechanism, the file fragments of File A and File B in the structured file system are still discontinuous. It can be seen that the existing garbage collection mechanism does not alleviate internal file fragmentation. When sequential reading of File A and File B is required, the internal fragmentation of the files increases the number of I/Os and overhead, degrading the performance of sequential-addressing storage devices.

Based on this, to alleviate the problem of internal file fragmentation, embodiments of the present disclosure provides a file processing method, apparatus, device, and storage medium. The fragment sequence positions of the file fragments is determined through the configuration parameter of the file fragments. Then, the target position of each file fragment in a target reserved area is determined according to the fragment sequence positions. In this way, it is ensured that the file fragments written into the target reserved area are continuous, thereby alleviating the problem of internal file fragmentation.

The implementation details of the technical solution of the embodiments of the present disclosure are elaborated in detail below:

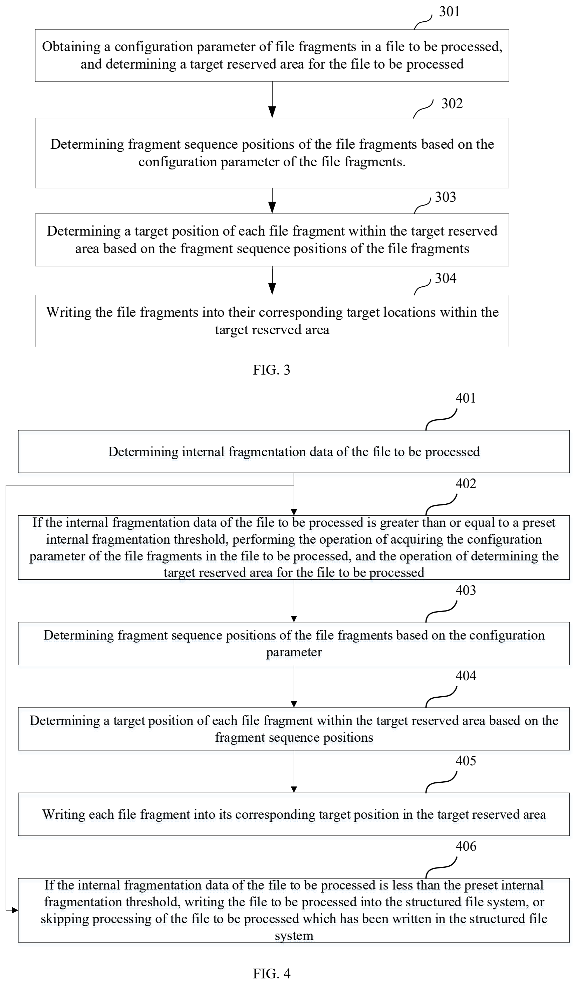

FIG. 3 is a schematic diagram of an embodiment of a file processing method provided by the present disclosure. This method can be executed by an electronic device with data storage and data processing capabilities, such as a server, smartphone, tablet, personal computer, etc., without specific limitations.

As shown in FIG. 3, the method includes at least operations described in blocks 301 to 304, which are described in detail below:
Operation 301: Obtaining a configuration parameter of file fragments in a file to be processed, and determining a target reserved area for the file to be processed.

In the present disclosure, the file to be processed may be a file received by and to be written into a structured file system. For example, upon receiving a file write request, a file write operation is triggered to acquire the file to be processed. The file fragments of the file to be processed are traversed to obtain the configuration parameter of each file fragment. The file to be processed includes, but is not limited to: a file for initial writing, a file fragment or file to be updated, or a pre-existing written file in the structured file system. The type of the file to be processed is not limited in the present disclosure.

In some embodiments, when the file write operation involves initial file writing, the file to be written is designated as the file to be processed. Each file fragment is traversed to determine its configuration parameter.

In some other embodiments, when the file write operation involves file fragment update, the file fragment to be updated is acquired. Based on the file identifier of the file fragment to be updated, a corresponding pre-existing file with matching file identifier is identified in the structured file system. The combination of the file fragment to be updated and file fragments from the identified file with the matching file identifier is designated as the file to be processed. Each fragment in the file to be processed is traversed to determine its configuration parameter. File fragment update refers to data modification of at least one fragment in an already written file in the structured file system. The data modification includes, but is not limited to, file fragment overwriting or data updates within file fragments.

In some other embodiments, when the file write operation involves file update, the file to be updated is acquired and designated as the file to be processed. Each fragment within this file is traversed to determine its configuration parameter. File update refers to overwriting at least one already written file in the structured file system.

In some other embodiments of the present disclosure, the file to be processed may be an already written file in the structured file system. For example, upon receiving a defragmentation request, a file defragmentation operation is triggered. A target written file is selected from the structured file system, and is designated as the file to be processed. The file fragments of the file to be processed are traversed to obtain their configuration parameter. The target written file may be any already written file in the structured file system, or the target written file may be filtered from already written files in the structured file system based on a preset condition. The preset condition may include, but is not limited to, file size, file type, file update count and so on.

In the present disclosure, the configuration parameter represents the sequential order of fragments in the file to be processed, including but not limited to: fragment code, creation time, and update time of each file fragment in the file to be processed.

In the present disclosure, the target reserved area is a continuous storage space within the structured file system allocated exclusively for storing the file to be processed. This includes but is not limited to persistent storage areas and temporary storage areas. Persistent storage areas are dedicated solely to storing the file to be processed without recollecting free reserved space, while temporary storage areas allow recollection of unused reserved space.

Recollecting free reserved storage in the target reserved area refers to converting free reserved storage areas in the target reserved area into available storage when system free space is insufficient, thereby increasing the structured file system's remaining capacity. The structured file system's remaining space represent storage space consisting of free storage areas in the structured file system. Free storage areas refer to regions in the structured file system which do not include written data and do not belong to any conventional storage areas.

In some embodiments of the present disclosure, the file identifier of the file to be processed may be obtained. The reserved area in the structured file system that matches this file identifier may be determined as the target reserved area for the file to be processed. The file identifier may include one or more selected from: letter, number, and special character, and can represent the file type of the file to be processed. The file type may include, but is not limited to, video file, text file, audio file, and image file. For example, continuous free storage areas in the structured file system may be divided into multiple reserved areas, with each area having predefined file type. By querying the preset mapping relationship between file identifiers and file types based on the file identifier of the file to be processed, the corresponding file type of the file to be processed is obtained. Based on the predefined file types of the reserved areas, the reserved area whose corresponding predefined file type matches the file type of the file to be processed may be determined as the target reserved area for the file to be processed.

In some other embodiments of the present disclosure, an isolation mechanism may be employed to designate continuous free storage areas in the structured file system as the target reserved area for the file to be processed. For instance, continuous free storage areas in the structured file system may be divided into at least two storage areas: a first storage area and a second storage area. The first storage area is configured as a conventional storage area, while the second storage area is designated as the target reserved area. The isolation mechanism ensures that write, update, or erase operations performed on data within the target reserved area do not affect data stored in the conventional storage area, i.e., the first storage area.

Operation 302: Determining fragment sequence positions of the file fragments based on the configuration parameter of the file fragments.

The file fragments are sorted based on values of the configuration parameter of the file fragments to acquire a file fragment sequence. The fragment sequence position of a file fragment refers to the position of the file fragment in the file fragment sequence.

In some embodiments, the file fragments may be sorted in descending order based on values of the configuration parameter, or may be sorted in ascending order based on values of the configuration parameter.

Operation 303: Determining a target position of each file fragment within the target reserved area based on the fragment sequence positions of the file fragments.

The target position may be defined by the starting address of free reserved storage space within the target reserved area, or by a specific address range corresponding to a free reserved storage space within the target reserved area. The address refers to the physical address of data within the structured file system.

In some embodiments, based on the fragment sequence position of the file fragments, pre-stored mapping relation between fragment sequence positions and positions may be queried to acquire target positions associated with the fragment sequence positions. The target position associated with a specific fragment sequence position is determined as the target position within the target reserved area of the file fragment corresponding to the specific fragment sequence position. Specifically, the mapping relation between fragment sequence positions and positions may include multiple fragment sequence positions and their corresponding positions.

In some other embodiments, continuous free reserved storage areas within the target reserved area may be identified. The fragment sequence positions of the file fragments may be traversed. Starting from the first free reserved storage area in the continuous free reserved storage areas, the address range or starting address of the first free reserved storage area may be set as the target position in the target reserved area of a file fragment with the first fragment sequence position. The address range or starting address of the next free reserved storage area which is adjacent to the first free reserved storage area is set as the target position in the target reserved area of a file fragment with the second fragment sequence position. The above process is repeated until all the file fragments are processed.

Specifically, the first free reserved storage area refers to one free reserved area with the lowest address range or starting address among continuous free reserved areas.

Operation 304: Writing the file fragments into their corresponding target positions within the target reserved area.

In the present disclosure, after determining the target positions of the file fragments in the target reserved area, each file fragment is written into its respective corresponding target position within the target reserved area.

In some embodiments, when the file to be processed is a file to be written, based on the fragment sequence positions of the file fragments, the file fragments of the file to be processed may be sequentially written into their corresponding target positions within the target reserved area. For example, assuming the file to be processed contains four fragments: A1, A2, A3 and A4 with corresponding fragment sequence positions: A1<A2<A3<A4, these fragments A1, A2, A3, and A4 may be written sequentially into their corresponding target positions within the target reserved area.

In some embodiments, when the file to be processed is an already written file, based on the fragment sequence positions of the file fragments, file fragments corresponding to the fragment sequence positions may be copied, and the copied file fragments corresponding to the fragment sequence positions may be written into their corresponding target positions within the target reserved area.

The file processing method provided by embodiments of the present disclosure determines the fragment sequence positions of the file fragments based on the configuration parameter of the file fragments, and determines their target positions within the target reserved area based on the fragment sequence positions of the file fragments. This ensures continuous writing of file fragments into the target reserved area, thereby alleviating internal file fragmentation issues.

Building upon the embodiment shown in FIG.3, to enhance system performance, the fragmentation level of the file to be processed may be firstly evaluated. Only when the fragmentation level meets a certain requirement, the fragment handling process is performed. FIG. 4 shows a file process method according to another embodiment of the present disclosure. As shown in FIG.4, the file processing method may include at least operations described in blocks 401 to 406.

Operation 401: Determining internal fragmentation data of the file to be processed.

In this embodiment, the file to be processed may be a file that has already been written in the structured file system, which may be written into the structured file system at a past time point. The past time point may be one day ago, three days ago, or a week ago. In this embodiment, the file to be processed may be one of multiple files that have been written into the structured file system, which matches a preset rule. The preset rule may include one or more of: file tag, file size, or file type. For example, when the preset rule is related to file tag, an already written file with the file tag "internal fragmentation unprocessed" may be designated as a file to be processed.

In this embodiment, the internal fragmentation data represents the degree of internal fragmentation within the file to be processed, including but not limited to the disorder level of file fragments and the discontinuity level between fragments.

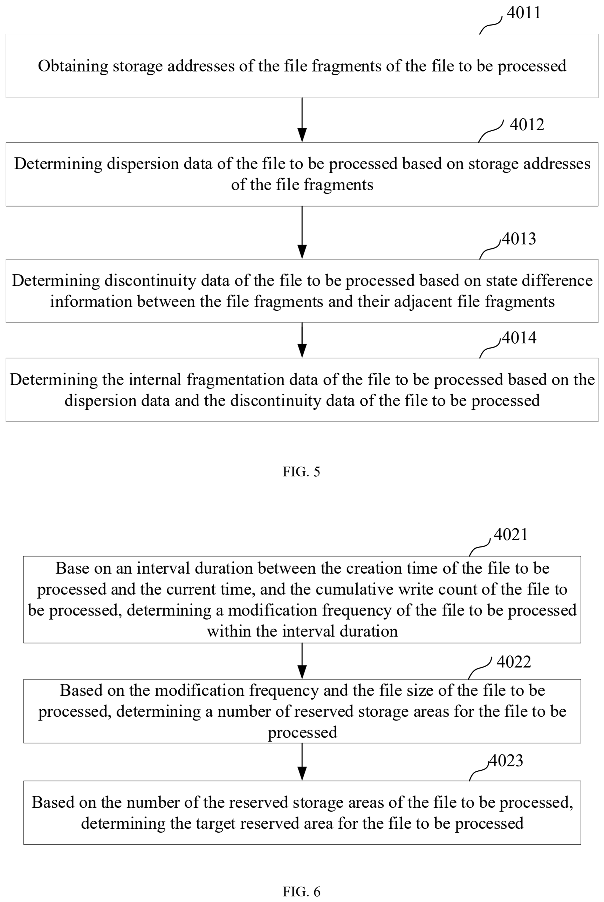

In some embodiments of the present disclosure, the internal fragmentation data of the file to be processed may be determined based on the storage addresses of the file fragments of the file to be processed. Specifically, as shown in FIG. 5, the present disclosure provides a method for determining internal fragmentation data, which may include operations described in blocks 4011 to 4014.

Operation 4011, obtaining storage addresses of the file fragments of the file to be processed.

The storage address can be the starting physical address of a file fragment in the structured file system, or the physical address range of a file fragment in the structured file system. In some embodiments, the storage addresses of file fragments of the file to be processed can be directly read from the structured file system. In other embodiments, the logical addresses of file fragments of the file to be processed can be read from the structured file system, and mapping information for the logical storage addresses of the file to be processed can be acquired. Based on mapping information for the logical storage addresses of the file to be processed, the storage addresses of file fragments of the file to be processed may be obtained. The mapping information for the logical storage addresses may include the mapping relation between logical addresses and storage addresses.

In some embodiments, files that are written into the structured file system for the first time may have relatively low internal fragmentation. Thus, for the file to be processed which is to be written into the structured file system for the first time based on the file write operation, the file to be processed may be directly written into remaining space of the structured file system. Alternatively, the target reserved area for the file to be processed can be determined, and file fragments can be sequentially written into free reserved storage areas within this target reserved area based on values of the configuration parameter of file fragments in the file to be processed.

In some embodiments, the file to be processed may be a file which is not written into the structured file system for the first time. In other words, the file write operation is for file fragment update. Factors like fragment updates for the file fragments and discontinuous remaining space in the structured file system may cause internal fragmentation within the file to be processed. Therefore, the storage addresses of file fragments of the file to be processed in the structured file system can be obtained, and operations 4012 to 4014 are executed to determine the internal fragmentation data of the file to be processed.

Operation 4012: Determining dispersion data of the file to be processed based on storage addresses of the file fragments.

The dispersion data may be configured to quantify the disorder degree of the file fragments of the file to be processed.

In some embodiments, the logical address range of the file to be processed can be determined based on its logical addresses. By combining the logical address range of the file to be processed with the storage addresses of file fragments, the dispersion data of the file to be processed can be obtained. The dispersion data may represent the count of file fragments with disordered storage addresses. For example, if File A's logical range LAB10-LAB13 corresponds to storage addresses PPN10, PPN12, PPN11, and PPN13, its dispersion data is equal to 2. If File B's logical range LAB14-LAB17 corresponds to storage addresses PPN14-PPN17, its dispersion data is equal to 0.

In some other embodiments, based on values of the configuration parameter of the file fragments in the file to be processed, storage addresses of the file fragments, the number of file fragments in the file to be processed with disordered storage addresses can be counted. Then the dispersion data of the file to be processed may be obtained accordingly. Specifically, the method for determining the dispersion data may include operations 40121 to 40123.

Operation 40121: Determining the fragment sequence positions of the file fragments based on values of the configuration parameter of the file fragments in the file to be processed.

Operation 40122: Determining storage sequence positions of the file fragments based on storage addresses of the file fragments in the file to be processed.

Operation 40123: Determining the dispersion data of the file to be processed based on a difference information between storage sequence positions and fragment sequence positions of the file fragments.

In some embodiments, the difference information may reflect the order difference or similarity between storage sequence positions and fragment sequence positions of the file fragments. For example, taking the difference information being the order difference between storage sequence positions and fragment sequence positions of the file fragments as an example: for one file fragment, the order difference between its storage sequence position and its fragment sequence position can be determined. If the calculated order difference is not equal to 0, it can be determined that the storage sequence position and the fragment sequence position of this file fragment are not consistent. If the calculated order difference is equal to 0, it can be determined that the storage sequence position and the fragment sequence position of this file fragment are consistent. The number of file fragments in the file to be processed with inconsistent storage sequence position and fragment sequence position can be counted to obtain the dispersion data of the file to be processed. For instance, assuming the configuration parameter is fragment code, file fragments A1, A2, A3, and A4 of File A correspond to file codes 001, 002, 003, and 004 respectively, in such case, the fragment sequence positions of the file fragments A1, A2, A3, and A4 of File A are 1, 2, 3, and 4 respectively. If the storage sequence positions of the file fragments A1, A2, A3, and A4 of File A are 4, 3, 2, and 1, all of which are not consistent with the fragment sequence positions of the corresponding file fragments, it can be determined that the dispersion data of the file to be processed is equal to 4. If the storage sequence positions of the file fragments A1, A2, A3, and A4 of File A are 1, 2, 3, and 4, all of which are consistent with the fragment sequence positions of the corresponding file fragments, it can be determined that the dispersion data of the file to be processed is equal to 0.

Operation 4013: Determining discontinuity data of the file to be processed based on state difference information between the file fragments and their adjacent file fragments.

The state difference information represents the difference between state information of a file fragment and its adjacent file fragment(s). The discontinuity data is configured to quantify the discontinuity degree of the file to be processed. The discontinuity degree reflects whether all file fragments of the file to be processed are stored in a continuous storage space. When the discontinuity degree is not equal to 0, it can be determined that not all file fragments of the file to be processed are stored in a continuous storage space; when the discontinuity degree is equal to 0, it can be determined that all file fragments of the file to be processed are stored in a continuous storage space. The state information may include file identifier of the file fragment, or storage state of the file fragment. The storage state may include "stored" or "free".

In 4013, the state information of each file fragment and its adjacent file fragment can be compared to determine the state difference information between the file fragments and their adjacent file fragments. Based on the state difference information, the discontinuity data of the file to be processed may be determined. Specifically, the method for determination of the discontinuity data of the file to be processed may at least include operations 40131 to 40133.

Operation 40131: For one file fragment, the state information of the file fragment is compared to the state information of one or more adjacent file fragment the file fragment.

Operation 40132: Determining a number of the one or more adjacent file fragments within inconsistent state information as a local discontinuity data of the file fragment.

Operation 40133: Obtaining the discontinuity data of the file to be processed based on local discontinuity data of the file fragments.

The adjacent file fragment may be a file fragment adjacent to and prior to the current file fragment, or a file fragment adjacent to and subsequent to the current file fragment.

For instance, assuming the adjacent file fragment is the preceding file fragment adjacent to the current file fragment, starting from the first file fragment of the file to be processed, the state information of a current file fragment can be compared with the adjacent file fragment of the current file fragment. If the state information of the current file fragment is consistent with the state information of the adjacent file fragment, it can be determined that the local discontinuity data of the current file fragment equals 0, and then the process moves to determination of the local discontinuity data of the next file fragment. If the state information of the current file fragment is inconsistent with the state information of the adjacent file fragment, a next file fragment of the adjacent file fragment is taken as a new adjacent file fragment and its state information is compared with the state information of the current file fragment. If the state information of the current file fragment and the new adjacent file fragment is consistent, it can be determined that the local discontinuity data of the current file fragment equals 1, and then the process moves to determination of the local discontinuity data of the next file fragment. If the state information of the current file fragment and the new adjacent file fragment is inconsistent, the state information of the current file fragment will be compared with the state information of a next adjacent file fragment of the new adjacent file fragment. The process is repeated until the state information of the "new adjacent" file fragment and the current file fragment is consistent, and accordingly the number of these adjacent file fragments which have inconsistent state information compared to the current file fragment can be counted to acquire the local discontinuity data. Then the process moves to determination of local discontinuity data for the next file fragment of the current file fragment.

In some embodiments, the local discontinuity data of all file fragments can be summed up to obtain the discontinuity data of the file to be processed.

In some other embodiments, the local discontinuity data of all file fragments can be counted to acquire statistical characteristics of the local discontinuity data, and these statistical characteristics can be taken as the discontinuity data of the file to be processed. The statistical characteristics include but are not limited to the mean, maximum, and range of all the local discontinuity data.

Operation 4014: Determining the internal fragmentation data of the file to be processed based on the dispersion data and the discontinuity data of the file to be processed.

In some embodiments, the dispersion data and the discontinuity data of the file to be processed may be summed up to obtain the internal fragmentation data of the file to be processed.

In some other embodiments, the arithmetic mean or weighted average of the dispersion data and the discontinuity data of the file to be processed may be taken as the internal fragmentation data of the file to be processed.

In some other embodiments, the weights corresponding to the dispersion data and the discontinuity data of the file to be processed may be acquired. Based on the dispersion data and the discontinuity data of the file to be processed, and weights of the dispersion data and the discontinuity data of the file to be processed, the weighted sum of the dispersion data and the discontinuity data of the file to be processed can be obtained. The weighted sum of the dispersion data and the discontinuity data of the file to be processed can be taken as the internal fragmentation data of the file to be processed.

Operation 402: If the internal fragmentation data of the file to be processed is greater than or equal to a preset internal fragmentation threshold, performing the operation of acquiring the configuration parameter of the file fragments in the file to be processed, and the operation of determining the target reserved area for the file to be processed.

In this embodiment, after the internal fragmentation data of the file to be processed is obtained, the internal fragmentation data of the file to be processed can be compared with a preset internal fragmentation data threshold. If the internal fragmentation data of the file to be processed is greater than or equal to the preset internal fragmentation threshold, it means the internal fragmentation level of the file to be processed is high. Correspondingly, the operation of acquiring the configuration parameter of the file fragments in the file to be processed and the operation of determining the target reserved area for the file to be processed are performed.

In this embodiment, the file size, cumulative write count and creation time of the file to be processed may be utilized for determination of the target reserved area for the file to be processed. As shown in FIG. 6, the present disclosure further provides a method for determining the target reserved area for the file to be processed. The method includes operations 4021 to 4023.

Operation 4021: Based on an interval duration between the creation time of the file to be processed and a current time, determining the modification frequency of the file to be processed within the interval duration.

In some embodiments, the modification frequency of the file to be processed within the interval duration can be obtained by dividing the cumulative write count by the interval duration

Operation 4022: Based on the modification frequency and the file size of the file to be processed, determining the number of reserved storage areas for the file to be processed.

In some embodiments, the product of the numerical value of the modification frequency and the file size of the file to be processed may be calculated to obtain the required storage space size for the file to be processed. The preset storage space size of each reserved storage area may also be acquired. By dividing the storage space size for the file to be processed by the storage space size of each reserved storage area, the number of reserved storage areas for the file to be processed can be obtained.

In some other embodiments, the preset storage space size of each reserved storage area can be obtained. By dividing the file size of the file to be processed by the storage space size of each reserved storage area, the initial number of reserved storage areas for the file to be processed may be obtained. By calculating (the initial number + (the initial data quantity * value of the modification frequency)), the number of reserved storage areas can be acquired.

In some other embodiments, the pre-stored relationship data between modification frequencies and quantity coefficients may be queried based on the modification frequency, to obtain a target quantity coefficient corresponding to a preset frequency range where the modification frequency falls. By multiplying the target quantity coefficient and the file size of the file to be processed, the required storage space size for the file to be processed may be obtained. The preset storage space size of each reserved storage area is also obtained. By dividing the required storage space size by the storage space size of each reserved storage area, the number of reserved storage areas for the file to be processed can be obtained. Alternatively, the preset storage space size of each reserved storage area can be obtained, by dividing the file size of the file to be processed by the storage space size of each reserved storage area, the initial number of the reserved storage areas for the file to be processed can be obtained. By calculating (the initial number + (initial data quantity * target quantity coefficient)), the number of reserved storage areas can be obtained. Specifically, the relation data between modification frequencies and quantity coefficients may include multiple preset modification frequency ranges and their corresponding quantity coefficients.

In some other embodiments, the modification frequency and the file size of the file to be processed may be input into a preset prediction model to obtain the number of reserved storage areas for the file to be processed. The prediction model could be a mathematical model such as a linear equation model or exponential equation model.

Operation 4023: Based on the number of reserved storage areas for the file to be processed, determining the target reserved area for the file to be processed.

The number of target reserved storage areas within the target reserved area is greater than or equal to the number of reserved storage areas for the file to be processed.

In some embodiments, based on the number of reserved storage areas for the file to be processed, the same number of continuous free storage areas within remaining storage space of the structured file system can be determined, and the same number of continuous free storage areas can be determined as the target reserved area for the file to be processed.

In some other embodiments, the file identifier of the file to be processed can be used to determine whether there already exists a target reserved area associated with the file to be processed. If not, the preset storage space size of each reserved storage area is obtained. By dividing the file size of the file to be processed by the storage space size of each reserved storage area, the initial number of the reserved storage areas for the file to be processed can be obtained. By adding the number of reserved storage areas for the file to be processed to the initial number, the number of reserved storage areas for the file to be processed can be obtained. Continuous free storage areas with the same number as the final calculation result within remaining storage space of the structured file system can be determined as the target reserved area for the file to be processed.

In some other embodiments, if there already exists a target reserved area associated with the file to be processed, the number of free reserved storage areas within the existing target reserved area can be compared with the number of reserved storage areas for the file to be processed. If the number of free reserved storage areas within the existing target reserved area is greater than or equal to the number of reserved storage areas for the file to be processed, the existing target reserved area associated with the file to be processed may be determined as the target reserved area for the file to be processed. If the number of free reserved storage areas within the existing target reserved area is less than or equal to the number of reserved storage areas for the file to be processed, the existing target reserved area can be updated to obtain the target reserved area for the file to be processed.

For update of the existing target reserved area, the number of free reserved storage areas within the existing target reserved area may be increased. In some embodiments, a target number of free storage areas within remaining storage space of the structured file system which are located adjacent to the existing target reserved area can be designated as free reserved storage areas, and are used to increase the number of free reserved storage areas within the existing target reserved area. In other embodiments, data stored in used reserved storage areas of the existing target reserved area can be combined or erased so as to increase the number of free reserved storage areas within the existing target reserved area. The target number can be determined based on the difference between the number of free reserved storage areas of the existing target reserved area and the number of reserved storage areas for the file to be processed. For instance, the absolute value of this difference can be set as the target number, or the sum of the absolute value of this difference and a preset parameter (where the parameter is a positive integer greater than 1) can be set as the target number.

In other embodiments, when the internal fragmentation data of the file to be processed is greater than or equal to the preset internal fragmentation threshold, it is checked whether there already exists a target reserved area associated with the file to be processed based on the file identifier of the file to be processed. If not, the above-described operations 4021 to 4023 may be utilized to determine the target reserved area for the file to be processed. If there already exists a target reserved area associated with the file to be processed, the target reserved area for the file to be processed may be determined based on the number of free reserved storage areas of the already existing target reserved area, the file size of the file to be processed, the cumulative write count, and the creation time.

In some embodiments, if there already exists a target reserved area associated with the file to be processed, the number of free reserved storage areas of the existing target reserved area can be compared with a preset quantity threshold. If the number of free storage areas of the existing target reserved area is greater than the preset quantity threshold, the existing reserved area associated with the file to be processed may be set as the target reserved area for the file to be processed. If the number of free storage areas of the existing target reserved area is less than or equal to the preset quantity threshold, the above-described operations 4021 to 4023 may be performed to determine the number of reserved storage areas for the file to be processed. Then, the existing target reserved area may be updated based on the number of reserved storage areas for the file to be processed and according to the operation 4023, so as to obtain the target reserved area for the file to be processed.

Operation 403: Determining fragment sequence positions of the file fragments based on the configuration parameter

This operation can be understood by referring to the content of operation 302 in FIG. 3, which will not be reiterated here.

In some embodiments, after the target reserved area of the file to be processed is determined, the file fragments may be sorted in ascending order based on values of the configuration parameter of these file fragments, so as to acquire the fragment sequence positions of the file fragments.

In some other embodiments, considering the out-of-place update mechanism where updated file fragments are not immediately erased but undergo periodic garbage collection in the structured file system, there may exist multiple file fragments with identical configuration parameter value but different write time. If the fragment sequence positions of the file fragments are determined merely depending on the configuration parameter of the file fragments, the determined fragment sequence positions may not be accurate. Therefore, to improve the accuracy of the fragment sequence positions of the file fragments, the configuration parameter and the write time of the file fragments may be utilized to determine the fragment sequence positions of the file fragments. For example, taking the configuration parameter includes the fragment code of the file fragment as an example, the method for determination of fragment sequence positions for the file fragments may include at least operations 4031 to 4033.

Operation 4031: Checking whether multiple first file fragments with identical fragment codes exist among the file fragments.

Operation 4032: If there are multiple first file fragments with identical fragment codes, determining a time difference between a write time and a current time for each first file fragment.

Operation 4033: Based on fragments codes, sorting one first file fragment which has the minimum time difference and a second file fragment to acquire the fragment sequence positions.

The second file fragment refers to a file fragment other than the first file fragment among all file fragments.

In some embodiments, if there does not exist first file fragments with identical fragment codes, the file fragments may be sorted in ascending order based on values of their fragment codes, so as to obtain the fragment sequence positions of the file fragment.

In some other embodiments, to improve the accuracy of the fragment sequence positions of the file fragments, it can be determined whether a pending erasure flag exists in each file fragment of the file to be processed. If no file fragment of the file to be processed has such pending erasure flag, the file fragments of the file to be processed may be sorted in ascending order based on values of their configuration parameter to obtain the fragment sequence positions of the file fragments. If one or more file fragments of the file to be processed have such pending erasure flag, the file fragment(s) with this flag may be removed. Then, the remaining file fragments may be sorted in ascending order based on values of their configuration parameter to acquire the fragment sequence positions.

Operation 404: Determining a target position of each file fragment within the target reserved area based on the fragment sequence positions.

In this embodiment, after the fragment sequence positions are determined, the target position of each file fragment in the target reserved area may be determined based on the fragment sequence positions of the file fragments and according to the method described in operation 303, which will not be repeated herein.

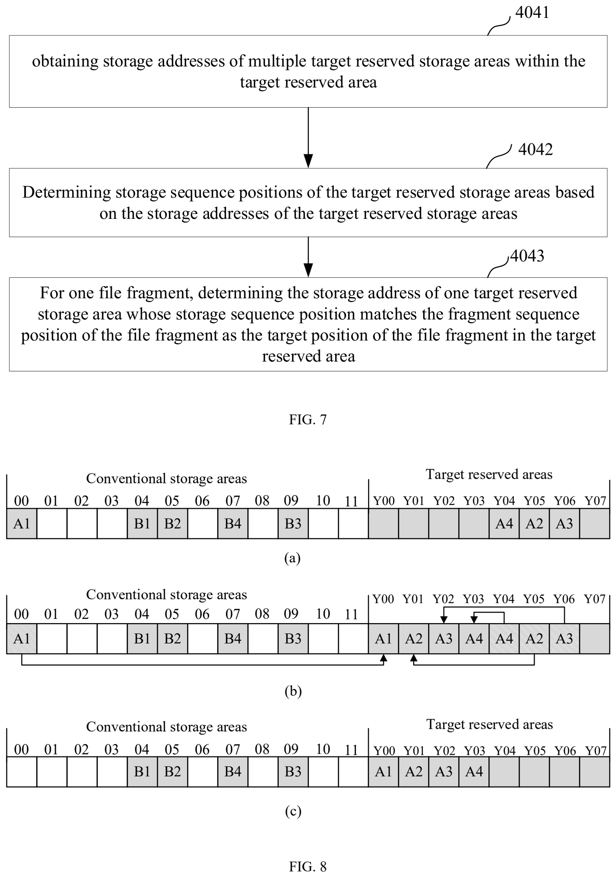

In other embodiments, after the fragment sequence positions are determined, storage areas of the free reserved storage areas within the target reserved area and the fragment sequence positions of the file fragments can be utilized to determine target free reserved storage areas within the target reserved area which correspond to the fragment sequence positions of the file fragments. Correspondingly, the storage address of a target free reserved storage area corresponding to the fragment sequence position of one file fragment may be determined as the target position of this file fragment within the target reserved area. As shown in FIG. 7, the present disclosure further provides a method for determination of target positions of file fragments within the target reserved area. The method includes operations 4041 to 4043.

Operation 4041: Obtaining storage addresses of multiple target reserved storage areas within the target reserved area.

A target reserved storage area refers to a free reserved storage area within the target reserved area.

Operation 4042: Determining storage sequence positions of the target reserved storage areas based on the storage addresses of the target reserved storage areas.

In some embodiments, the target reserved storage areas may be sorted in ascending order based on values of storage addresses of these target reserved storage areas. The storage sequence positions of the target reserved storage areas may be determined based on the sorted target reserved storage areas.

Operation 4043: For each file fragment, determining the storage address of one target reserved storage area whose storage sequence position matches the fragment sequence position of the file fragment as the target position of the file fragment in the target reserved area.

In some embodiments, after the target positions of the file fragments within the target reserved area are determined, the target positions of the file fragments within the target reserved area may be utilized for writing the file fragments into their corresponding target positions within the target reserved area.

Operation 405: Writing each file fragment into its corresponding target position in the target reserved area.

This embodiment can be understood by referring to operation 304 in FIG. 3. Similar contents will not be repeated herein.

In this embodiment, when the file to be processed is a file which is to be written into the structured file system, each file fragment may be written into its target position within the target reserved area based on the target positions of the file fragments within the target reserved area.

In some other embodiments, when the file to be processed is a file which has already been written in the structured file system, the storage addresses of file fragments of the file to be processed may be obtained. For each file fragment, based on its storage address and its target position within the target reserved area, the file fragment can be synchronized to the target position within the target reserved area.

In some embodiments, based on the target positions of the file fragments within the target reserved area, mapping may be established between logical addresses of file fragments and their target positions within the target reserved area, so as to update storage addresses for the file fragments, and write the file fragments into their corresponding target positions within the target reserved area.

In some other embodiments, based on the target positions of the file fragments within the target reserved area, storage addresses of the file fragments may be obtained. Based on storage addresses of the file fragments and their target positions within the target reserved area, offset positions of the file fragments can be determined. Based on the offset positions of the file fragments, the file fragments may be copied to acquired copied file fragments, and the copied file fragments may be written into the target positions of their corresponding original file fragments within the target reserved area.

In some other embodiments of the present disclosure, it is considered that rewriting all file fragments would create excessive data quantity and workload, and when the file to be processed is a file that has already been written in the structured file system, storage addresses of some file fragments of the file to be processed may be identical to their target positions within the target reserved area. If re-write operation is performed for these file fragments, the re-write operation brings no effects but increases the word load. Therefore, in order to reduce the data quantity of the file fragments that needs to be written into the target reserved area, in this embodiment, based on offset positions between storage addresses of the file fragments and their target positions within the target reserved area, those target file fragments which need to be moved may be filtered based on their offset positions. The target file fragments may be written into their target positions within the target reserved area. Specifically, the method for writing the file fragments into the target reserved area include operations 4051 to 4053.

Operation 4051: Obtaining storage addresses of the file fragments

Operation 4052: Based on the storage addresses of the file fragments and their target positions within the target reserved area, the offset positions of the file fragments are determined.

An offset position refers to the position difference between the storage address of one file fragment and its target position within the target reserved area.

Operation 4053: For each target file fragment whose offset position is larger than a preset offset position, writing the target file fragment into the target position of the target file fragment in the target reserved area

In some embodiments, for each file fragment, its offset position can be compared with a preset offset position. If the offset position of the file fragment is less than or equal to the preset offset position, it means that the storage address of this file fragment is identical to its target position within the target reserved area, and there is no need to process this file fragment. Then, the process may move to checking whether the offset position of a next file fragment is larger than the preset offset position. If the offset position of the file fragment is greater than the preset offset position, it means that the storage address of this file fragment is different from its target position within the target reserved area, and this file fragment needs to be processed. Accordingly, this file fragment may be set as a target file fragment. Each target file fragment may be synchronized to its target position within the target reserved area, such that the target file fragment is written into its target position within the target reserved area.

For example, FIG. 8 shows a schematic diagram of file internal fragmentation processing according to an embodiment of the present disclosure. As shown in subchart (a) of FIG. 8, File A includes file fragments A1, A2, A3 and A4. The file fragments A2, A3, and A4 are stored in an existing target reserved area for File A, and storage addresses of the file fragments A2, A3, and A4 are disordered. The file fragment A1 is stored in a conventional storage area of the structured file system. In this case, the internal fragmentation level of File A is high. The target reserved area of File A may be determined according to the above-described operations 4021 to 4023, and the target positions of the file fragments A1, A2, A3, and A4 within the target reserved area may be determined according to the above-described operations 4041 to 4043. The file fragments A1, A2, A3, and A4 may be synchronized to their target positions within the target reserved area according to the above-described operations 4051 to 4053. As shown in subchart (b) of FIG. 8, the file fragment A1 in the storage area 00 may be synchronized to the target position Y00 within the target reserved area, the file fragment A2 at position Y05 in the target reserved area may be synchronized to the target position Y01 within the target reserved area, the file fragment A3 at position Y06 in the target reserved area may be synchronized to the target position Y02 within the target reserved area, and the file fragment A2 at position Y04 in the target reserved area may be synchronized to the target position Y03 within the target reserved area. In addition, the file fragments within the storage area 00, and the positions Y05, Y06, and Y04 of the target reserved area may be erased. In this way, the file fragments A1, A2, A3, and A4 may be stored continuously in the target reserved area according to their fragment sequence positions, as shown in subchart (c) of FIG. 8.

In some embodiments, after the target file fragments of the file to be processed are written into their target positions within the target reserved area, the target file fragment(s) of the file to be processed which are not located at the target position(s) may be erased, such that remaining storage space in the structured file system may be increased. Alternatively, the target file fragment(s) of the file to be processed which are not located at the target position(s) may be marked with a pending-erasure flag. In a subsequent garbage collection process, those target file fragments with such pending-erasure flag may be erased.

In some embodiments, after the file fragments are written into their target positions within the target reserved area, when it is detected that a certain file fragment of the file to be processed needs to be updated, in-place update mechanism may be utilized. For example, when a file fragment Al of the file to be processed needs to be updated, the received to-be-updated file fragment for A1 may be written into the target position M1 within the target reserved area where the file fragment A1 is located, such that the original file fragment A1 located at the target position M1 is overwritten.

In some embodiments of the present disclosure, after the file fragments are written into their target positions within the target reserved area, when it is detected that a certain file fragment of the file to be processed needs to be updated, out-of-place update mechanism may be utilized. For example, when a file fragment A1 of the file to be processed needs to be updated, the received to-be-updated file fragment for A1 may be written into a first free reserved storage area among free reserved storage areas within the target reserved area, and the file fragment A1 stored at the target position M1 in the target reserved area may be erased. Then the operations 404 and 405 may be performed to write the to-be-updated file fragment for A1 into the target position M1.

Operation 406: After the operation 401, if the internal fragmentation data of the file to be processed is less than the preset internal fragmentation threshold, writing the file to be processed into the structured file system, or skipping processing of the file to be processed which has been written in the structured file system.

The operation of writing the file to be processed into the structured file system may refers to: writing the file to be processed into remaining storage space of the structured file system, or the file to be processed into free reserved storage areas in the target reserved area of the structured file system. It should be understood, when the internal fragmentation data of the file fragment is relatively low, writing it into the target reserved area of the structured file system does not entail writing each file fragment to its corresponding target position within the target reserved area.

According to the above embodiments of the present disclosure, whether to perform internal fragmentation processing to a file to be processed is determined based on the internal fragmentation data of the file.

When such processing is required, the target reserved area is determined based on file size, creation time, and cumulative write count. File fragments of the file to be processed are then written into this target reserved area based on their offset positions. In this way, file fragments of the file to be processed may be arranged sequentially and continuously in the target reserved area, thereby reducing internal file fragmentation and mitigating internal fragmentation issues.

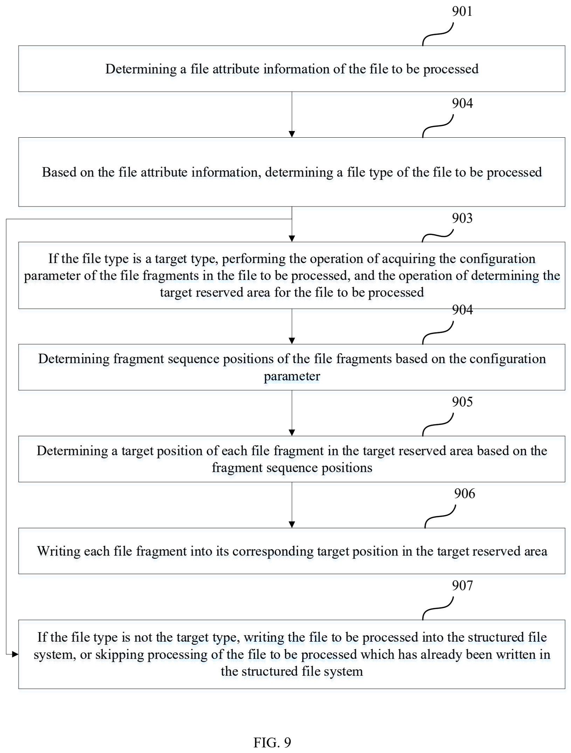

Based on the embodiment shown in FIG. 3, to enhance system performance and reduce I/O consumption during reading for files requiring sequential reads, before the operation of acquiring the configuration parameter of each file fragment in a file to be processed, the file type of the file to be processed may first be determined based on its file attribute information. When the file type is a preset target type, the target reserved area for the file to be processed is then determined. As shown in FIG. 9, FIG. 9 illustrates another embodiment of the file processing method provided in the present disclosure. The file processing method shown in FIG. 9 may include the following operations.

Operation 901: Determining a file attribute information of the file to be processed.

The file attribute information includes but is not limited to file size, internal fragmentation data, file write count, file read size, and file read parameters. The file read parameters include the number of times the file to be processed has been read according to a target read method. The target read method includes sequential read.

In some embodiments, the internal fragmentation data of the file to be processed may be determined according to operations 4011 to 4014 described above, which will not be repeated herein.

Operation 902: Determine the file type of the file to be processed based on the file attribute information.

The file types include but are not limited to fragmentation-prone file, fragmentation-sensitive file, non-fragmentation-prone file, non-fragmentation-sensitive file, and normal file. A normal file refers to a file that is neither fragmentation-prone nor fragmentation-sensitive. A fragmentation-prone file refers to a file whose storage addresses are discontinuous. A fragmentation-sensitive file refers to a file that requires sequential reading.

In some embodiments, for fragmentation-prone file identification, whether the file type of the file to be processed is fragmentation-prone may be determined based on file size, internal fragmentation data, and file write count. Specifically, the fragmentation-prone file determination method includes the content of operations 9021A to 9022A.

Operation 9021A: Comparing the file size with a first preset file size threshold, comparing the internal fragmentation data with a preset first fragmentation threshold, and comparing the file write count with a preset file write count threshold.

In some embodiments, the file size, internal fragmentation data, and file write count of the file to be processed may be compared with their respective thresholds. For example, the file size is compared with the first preset file size threshold, the internal fragmentation data is compared with the preset first fragmentation threshold, and the file write count is compared with the preset file write count threshold.

In other embodiments, the file size, file write count, and internal fragmentation data of the file to be processed may be compared with their respective thresholds sequentially. For example, the file size of the file to be processed is compared with the first preset file size threshold. If the file size is less than the first preset file size threshold, it can be determined that the file type is non-fragmentation-prone. If the file size is greater than or equal to the first preset file size threshold, the file write count is compared with the preset file write count threshold. If the file write count is less than the preset file write count threshold, it can be determined that the file type is non-fragmentation-prone. If the file write count is greater than or equal to the preset file write count threshold, the internal fragmentation data is compared with the preset first fragmentation threshold. If the internal fragmentation data is less than the preset first fragmentation threshold, it can be determined that the file type is non-fragmentation-prone. If the internal fragmentation data is greater than or equal to the preset first fragmentation threshold, it can be determined that the file type is fragmentation-prone.

Operation 9022A: If the file size is greater than or equal to the preset file size threshold, the internal fragmentation data is greater than or equal to the preset first fragmentation threshold, and the file write count is greater than or equal to the preset file write count threshold, determining the file type of the file to be processed as fragmentation-prone.

In this embodiment, if the file to be processed satisfies one or more of the following conditions, its file type is determined as non-fragmentation-prone: file size less than the preset file size threshold, internal fragmentation data less than the preset first fragmentation threshold, and file write count less than the preset file write count threshold.

In other embodiments, it may be checked whether the file to be processed carries a fragmentation-prone file marker. If it carries this marker, the file type is determined as fragmentation-prone. If it does not carry this marker, the fragmentation-prone file determination method shown in operations 9021A to 9022A is executed to determine the file type.

In some embodiments, for fragmentation-sensitive file identification, whether the file type is fragmentation-sensitive is determined based on file size, internal fragmentation data, file read size, and file read parameters. Specifically, the fragmentation-sensitive file determination method includes operations 9021B-9022B:
Operation 902 1B: Comparing the file size with a second preset file size threshold, comparing the file read size with a preset file read size threshold, comparing the internal fragmentation data with a preset second fragmentation threshold, and comparing the file read parameters with a preset read parameter.

Operation 9022B: If the file size is greater than or equal to the second preset file size threshold, the file read size is greater than or equal to the preset file read size threshold, the internal fragmentation data is greater than or equal to the preset second fragmentation threshold, and the file read parameters are greater than or equal to the preset read parameter, determining the file type of the file to be processed as fragmentation-sensitive.

In this embodiment, if the file to be processed satisfies one or more of the following conditions, its file type is determined as non-fragmentation-sensitive: file size less than the second preset file size threshold, file read size less than the preset file read size threshold, internal fragmentation data less than the preset second fragmentation threshold, and file read parameters less than the preset read parameter.

In some embodiments, it may be checked whether the file to be processed carries a fragmentation-sensitive file marker. If it carries this marker, the file type is determined as fragmentation-sensitive. If it does not carry this marker, the fragmentation-sensitive file determination method shown in operations 9021B to 9022B is executed to determine the file type.

It should be noticed that the specific values of the preset first file size threshold, preset first fragmentation threshold, preset file write count threshold, preset second file size threshold, preset second fragmentation threshold, preset read parameter, and preset file read size threshold are not limited in this embodiment and may be set according to specific application scenarios.

In some embodiments, for the file to be processed, operations 9021A-9022A and operations 9021B-9022B may be executed in parallel to determine the file type. Alternatively, these operations may be executed in a preset order to determine the file type. For example, operations 9021A-9022A may be firstly performed for fragmentation-prone file identification, then operations 9021B-9022B may be performed for fragmentation-sensitive file identification, and the file type of the file to be process can be determined based on both identification results. Alternatively, operations 9021B-9022B may be firstly performed for fragmentation-sensitive file identification, then operations 9021A-9022A may be performed for fragmentation-prone file identification, and the file type of the file to be process can be determined based on both identification results. The fragmentation-prone file identification result indicates whether the file is fragmentation-prone. The fragmentation-sensitive file identification result indicates whether the file is fragmentation-sensitive.

Operation 903: If the file type is a target type, performing the operation of acquiring the configuration parameter of the file fragments in the file to be processed, and the operation of determining the target reserved area for the file to be processed.

The target type includes at least one of fragmentation-prone file and fragmentation-sensitive file.

In some embodiments, if the file type is the preset target type, reference may be made to the content of operations 4021-4023 in FIG. 6 for understanding, which will not be repeated herein.

Operation 904: Determining fragment sequence positions of the file fragments based on the configuration parameter.

This step may be understood by referring to operation 403 in FIG. 4, which will not be repeated herein.

Operation 905: Determining a target position of each file fragment in the target reserved area based on the fragment sequence positions.

This step may be understood by referring to operation 404 in FIG. 4, which will not be repeated herein.

Operation 906: Writing each file fragment into its corresponding target position in the target reserved area.

This step may be understood by referring to operation 405 in FIG. 4, which will not be repeated herein.

Operation 907: After operation 902, if the file type is not the target type, writing the file to be processed into the structured file system, or skipping processing of the file to be processed which has already been written in the structured file system.

In some embodiments, when the file to be processed has already been written in the structured file system and its file type is not the preset target type, no internal fragmentation processing is performed on this file.

In other embodiments, when the file to be processed is to be written into the structured file system and its file type is not the preset target type, the file is written into the remaining storage space of the structured file system through an out-of-place update mechanism. Alternatively, the file is written into the target reserved area of the file to be processed through an out-of-place update mechanism. Alternatively, the file is written into the remaining storage space of the structured file system through an in-place update mechanism. Alternatively, the file is written into the target reserved area of the file to be processed through an in-place update mechanism.

In this embodiment, the file type of the file to be processed is determined based on file attribute information. When the file type is the preset target type, the target reserved area of the file to be processed is determined for internal fragmentation processing. This allows internal fragmentation processing for files that require sequential reading but have internal fragmentation data below a preset threshold, thereby reducing I/O consumption during reading of such kind of files and improving storage device performance.

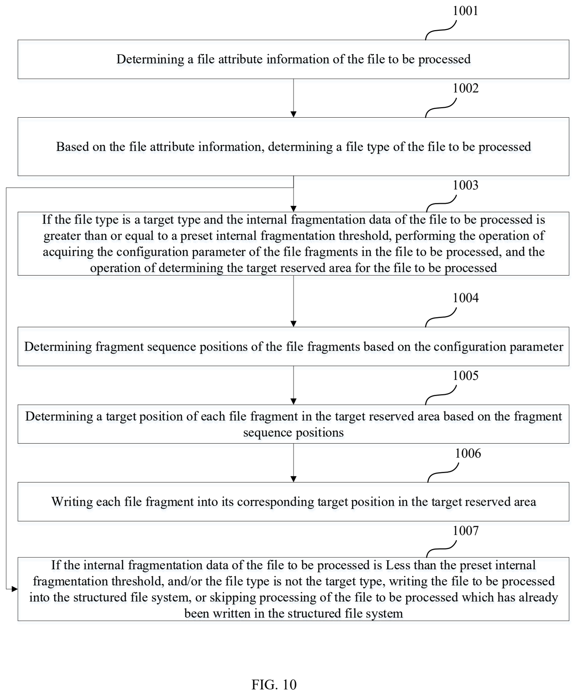

Based on the embodiment shown in FIG. 3, to further enhance system performance while reducing the workload of the structured file system, the file type of the file to be processed may first be determined according to the fragmentation-prone file determination method and fragmentation-sensitive file determination method described above. When the file type is a preset target type, whether to perform internal fragmentation processing is determined based on the internal fragmentation data of the file to be processed. This dual screening through file type and internal fragmentation data reduces the number of files requiring internal fragmentation processing, thereby decreasing the workload of the structured file system. As shown in FIG. 10, another embodiment of the file processing method provided in the present disclosure may include the following operations:
Operation 1001: Determining a file attribute information of the file to be processed.

The file attribute information includes but is not limited to file size, internal fragmentation data, file write count, file read size, and file read parameters. The file read parameters include the number of times the file to be processed has been read according to a target read method. The target read method includes sequential read.

In some embodiments, the internal fragmentation data of the file to be processed may be determined according to operations 4011-4014 described above, which will not be repeated herein.

Operation 1002: Determining a file type of the file to be processed based on the file attribute information.

The file types include but are not limited to fragmentation-prone file, fragmentation-sensitive file, non-fragmentation-prone file, non-fragmentation-sensitive file, and normal file. A normal file refers to a file that is neither fragmentation-prone nor fragmentation-sensitive. A fragmentation-prone file refers to a file whose storage addresses are discontinuous. A fragmentation-sensitive file refers to a file that requires sequential reading.

This operation may be understood by referring to operation 902 in FIG. 9 for determining the file type of the file to be processed, which will not be repeated herein.

Operation 1003: If the file type is a target type and the internal fragmentation data of the file to be processed is greater than or equal to a preset internal fragmentation threshold, performing the operation of acquiring the configuration parameter of the file fragments in the file to be processed, and the operation of determining the target reserved area for the file to be processed.

In some embodiments, if the file type is the preset target type, the internal fragmentation data in the file attribute information of the file to be processed is compared with the preset internal fragmentation threshold. If the internal fragmentation data of the file to be processed is greater than or equal to the preset internal fragmentation threshold, the configuration parameter of each file fragment in the file to be processed is acquired, and the target reserved area for the file to be processed is determined.

In some embodiments, if the file type is the preset target type and the internal fragmentation data of the file to be processed is greater than or equal to the preset internal fragmentation threshold, reference may be made to the content of operations 4021-4023 in FIG. 6 for understanding, which will not be repeated herein.

Operation 1004: Determining fragment sequence positions of the file fragments based on the configuration parameter.

This operation may be understood by referring to operation 403 in FIG. 4, which will not be repeated herein.

Operation 1005: Determining a target position of each file fragment in the target reserved area based on the fragment sequence positions.

This operation may be understood by referring to operation 404 in FIG. 4, which will not be repeated herein.

Operation 1006: Writing each file fragment into its corresponding target position in the target reserved area.

This operation may be understood by referring to operation 405 in FIG. 4, which will not be repeated herein.

Operation 1007: After operation 1002, if the internal fragmentation data of the file to be processed is Less than the preset internal fragmentation threshold, and/or the file type is not the target type, writing the file to be processed into the structured file system, or skipping processing of the file to be processed which has already been written in the structured file system.

In some embodiments, when the file to be processed has already been written in the structured file system and its internal fragmentation data is less than a preset third fragmentation threshold, or its file type is not the preset target type, no internal fragmentation processing is performed on this file.

In other embodiments, when the file to be processed is to be written into the structured file system and its internal fragmentation data is less than the preset internal fragmentation threshold, or its file type is not the preset target type, the file is written into the remaining storage space of the structured file system through an out-of-place update mechanism. Alternatively, the file is written into the target reserved area of the file to be processed through an out-of-place update mechanism. Alternatively, the file is written into the remaining storage space of the structured file system through an in-place update mechanism. Alternatively, the file is written into the target reserved area of the file to be processed through an in-place update mechanism.

In this embodiment, whether to perform internal fragmentation processing on the file to be processed is determined based on the file type and internal fragmentation data of the file to be processed. This avoids performing internal fragmentation processing on files that are merely fragmentation-prone but do not require sequential reading, thereby reducing the workload of the structured file system and improving system stability.

Based on the embodiment shown in FIG. 3, to enhance system performance, improve the processing efficiency of the structured file system during fragmentation processing, and reduce its workload, files to be processed may be obtained from a pre-established to-be-organized list. Whether to perform internal fragmentation organization is determined based on the internal fragmentation data of the files to be processed. This ensures that only files in the to-be-organized list undergo fragmentation processing determination based on internal fragmentation data, improving the structured file system's processing efficiency during fragmentation. Additionally, screening based on both the to-be-organized list and the internal fragmentation data reduces the number of files to be processed, achieving the effect of lowering the structured file system's workload.

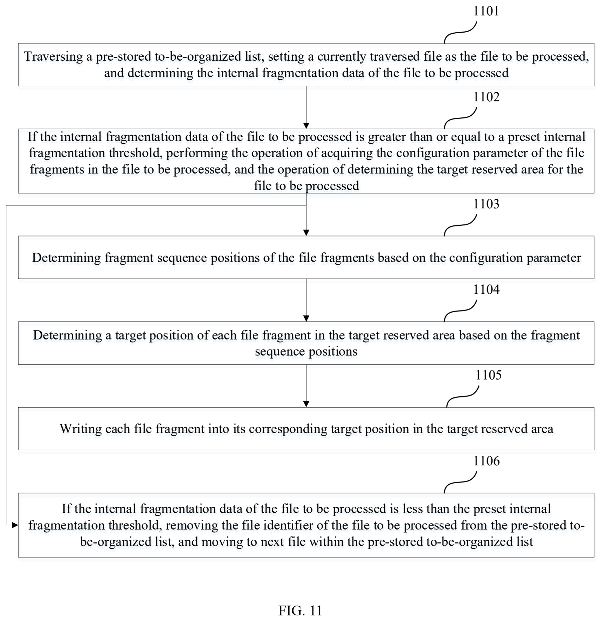

As shown in FIG. 11, another embodiment of the file processing method provided in the present disclosure may include the following operations:

Operation 1101: Traversing a pre-stored to-be-organized list, setting a currently traversed file as the file to be processed, and determining the internal fragmentation data of the file to be processed.

In some embodiments, the file stored in the to-be-organized list carries a fragmentation-sensitive file marker and/or a fragmentation-prone file marker. The fragmentation-sensitive file marker indicates that the file type is fragmentation-sensitive. The fragmentation-prone file marker indicates that the file type is fragmentation-prone.

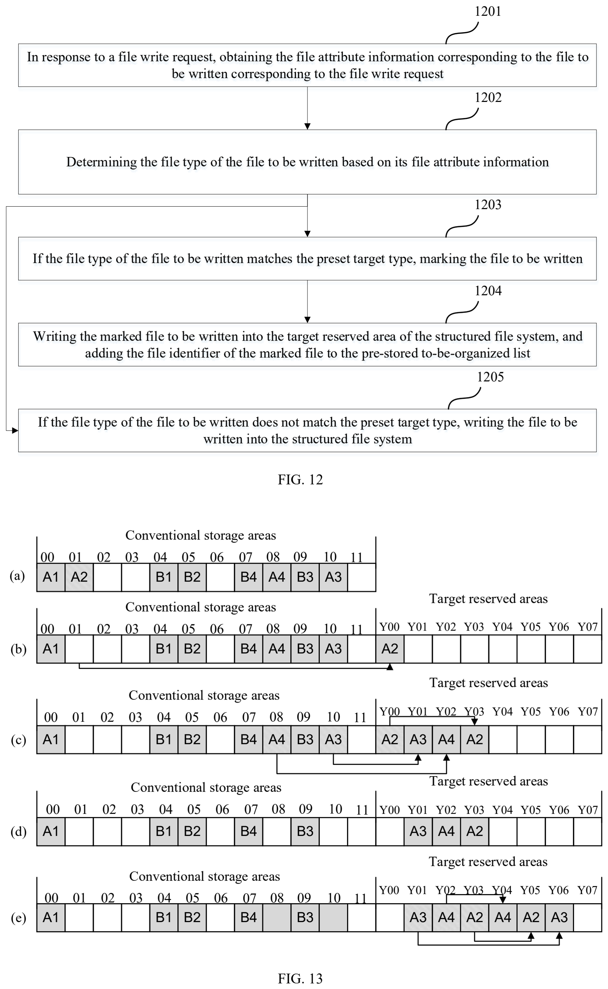

Optionally, when receiving a file write request, the structured file system obtains file attribute information of the file to be written corresponding to the request. The file type is determined based on the file attribute information of the file to be written. When the file type is fragmentation-sensitive and/or fragmentation-prone, the file to be written is marked, and the to-be-organized list is updated. Specifically, as shown in FIG. 12, an embodiment of the to-be-organized list update method may include operations 1201-1205:

Operation 1201: In response to a file write request, obtaining the file attribute information corresponding to the file to be written corresponding to the file write request.

The file attribute information includes but is not limited to file size, internal fragmentation data, file write count, file read size, and file read parameters. The file read parameters include the number of times the file to be written has been read according to a target read method. The target read method includes sequential read.

In some embodiments, the internal fragmentation data of the file to be written may be determined according to operations 4011-4014 described above, which will not be repeated herein.

Operation 1202: Determining the file type of the file to be written based on its file attribute information.

The file types include but are not limited to fragmentation-prone file, fragmentation-sensitive file, non-fragmentation-prone file, non-fragmentation-sensitive file, and normal file. A normal file refers to a file that is neither fragmentation-prone nor fragmentation-sensitive. A fragmentation-prone file refers to a file whose storage addresses are discontinuous. A fragmentation-sensitive file refers to a file that requires sequential reading.

This operation may be understood by referring to operation 902 in FIG. 9 for determining the file type of the file to be written, which will not be repeated herein.

Operation 1203: If the file type of the file to be written matches the preset target type, marking the file to be written.

In some embodiments, if the file type of the file to be written is fragmentation-prone, it is marked as fragmentation-prone. If the file type is fragmentation-sensitive, it is marked as fragmentation-sensitive.

Operation 1204: Writing the marked file to be written into the target reserved area of the structured file system, and adding the file identifier of the marked file to the pre-stored to-be-organized list.

In some embodiments, when writing the marked file to be written into the target reserved area of the structured file system, the target reserved area for the file to be written may be determined according to its file size, cumulative write count, and creation time, referring to the content of operations 4021-4023 in FIG. 6. The file is then written into the target reserved area, which will not be repeated herein.

In some embodiments, when writing the marked file to be written into the target reserved area of the structured file system, it is determined whether an existing target reserved area associated with this file exists in the structured file system. If no existing target reserved area associated with the file to be written exists, the target reserved area is determined by referring to operations 4021-4023 in FIG. 6, which will not be repeated herein. If an existing target reserved area associated with the file to be written exists, it is determined whether the file carries a fragmentation-prone file marker. If the file does not carry a fragmentation-prone file marker, it is written into the remaining storage space of the structured file system.

For example, as shown in FIG. 13, which illustrates a schematic diagram of file writing into a structured file system according to an embodiment of the present invention. In subchart (a) of FIG. 13, when file fragment A2 of file A is updated, since the storage areas for file fragments A1, A2, A3, and A4 in the conventional storage area of file A are discontinuous and unordered, file A is marked as a fragmentation-prone file. When updating file fragment A2 of file A, since no associated existing target area exists for file A, the target reserved area for the file to be written is determined according to the content of operations 4021-4023 in FIG. 6. As shown in subchart (b) of FIG. 13, the updated file fragment A2 is written into target reserved area Y00, and file fragment A2 in storage area 01 is erased. In subchart (c) of FIG. 12, when file fragments A3, A4, and A2 of file A are sequentially updated, the updated file fragment A3 is written into target reserved area Y01, the updated file fragment A4 is written into target reserved area Y02, and the re-updated file fragment A2 is written into target reserved area Y03. File fragment A3 in storage area 10, file fragment A4 in storage area 08, and file fragment A2 in target reserved area Y00 are erased, as shown in subchart (d) of FIG. 13. Furthermore, in subchart (d) of FIG. 13, when file fragments A4, A2, and A3 of file A are updated again sequentially, the re-updated file fragment A4 is written into target reserved area Y04, the re-updated file fragment A2 is written into target reserved area Y05, and the re-updated file fragment A3 is written into target reserved area Y06. As shown in FIG. 13, the file processing method provided by the present disclosure ensures that subsequent update operations on file fragments of file A after allocating the target reserved area do not affect areas outside the target reserved area. This mitigates the fragmentation of remaining space in the structured file system caused by file updates, i.e., alleviates external fragmentation issues in the structured file system caused by file updates.

Operation 1205: After operation 1202, if the file type of the file to be written does not match the preset target type, writing the file to be written into the structured file system.

In this embodiment, continuous target reserved areas are allocated to files to be written that carry fragmentation-prone markers and/or fragmentation-sensitive markers. Writing these files into target reserved areas effectively mitigates external fragmentation issues caused by file updates and writes.

In some embodiments, reference may be made to the content of operation 406 in FIG. 4 for writing the file to be written into the structured file system, which will not be repeated herein.

Operation 1102: If the internal fragmentation data of the file to be processed is greater than or equal to a preset internal fragmentation threshold, performing the operation of acquiring the configuration parameter of the file fragments in the file to be processed, and the operation of determining the target reserved area for the file to be processed.

In some embodiments, if the internal fragmentation data of the file to be processed is greater than or equal to the preset internal fragmentation threshold, reference may be made to the content of operations 4021-4023 in FIG. 6 for understanding, which will not be repeated herein.

Operation 1103: Determining fragment sequence positions of the file fragments based on the configuration parameter.

This operation may be understood by referring to operation 403 in FIG. 4, which will not be repeated herein.

Operation 1104: Determining a target position of each file fragment in the target reserved area based on the fragment sequence positions.

This operation may be understood by referring to operation 404 in FIG. 4, which will not be repeated herein.

Operation 1105: Writing each file fragment into its corresponding target position in the target reserved area.

This operation may be understood by referring to operation 405 in FIG. 4, which will not be repeated herein.

Operation 1106: After operation 1101, if the internal fragmentation data of the file to be processed is less than the preset internal fragmentation threshold, removing the file identifier of the file to be processed from the pre-stored to-be-organized list, and moving to next file within the pre-stored to-be-organized list.

In this embodiment, fragmentation processing determination is performed only on files in the to-be-organized list based on their internal fragmentation data. This improves the processing efficiency of the structured file system during fragmentation processing. By screening based on both the to-be-organized list and internal fragmentation data, the number of files to be processed is reduced, thereby decreasing the workload of the structured file system.

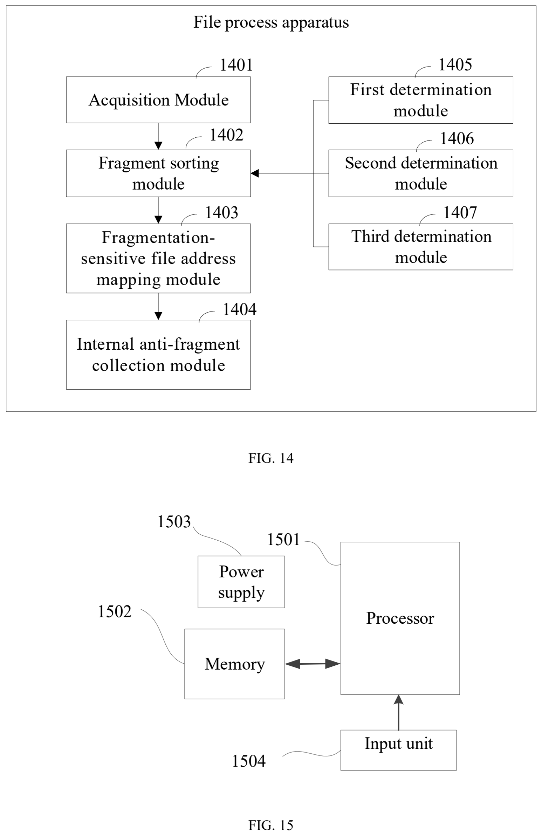

To better implement the file processing method provided in the embodiments of the present disclosure, a file processing apparatus is provided based on the method embodiments. Specifically, as shown in FIG. 14, which illustrates a structural diagram of the file processing apparatus according to an embodiment of the present disclosure, the apparatus includes the following modules.

Acquisition module 1401: Configured to acquire a configuration parameter of file fragments in a file to be processed and determine a target reserved area for the file to be processed.

Fragmentation sorting module 1402: Configured to determine fragment sequence positions of the file fragments based on the configuration parameter.

Fragmentation-sensitive file address mapping module 1403: Configured to determine target positions of the file fragments in the target reserved area based on their fragment sequence positions.

Internal anti-fragmentation collection module 1404: Configured to write each file fragment to its corresponding target position in the target reserved area.

In some embodiments, the configuration parameter includes fragment code of the file fragment. The fragmentation sorting module 1402 is configured to: check whether multiple first file fragments with identical fragment codes exist among the file fragments; if such fragments exist, determine time differences between write times of the first file fragments and the current time; sort the first file fragment with the smallest time difference and a second file fragment based on fragment codes to obtain the fragment sequence positions. The second file fragment refers to a file fragment other than the first fragment among all the file fragments.

In some embodiments, the fragmentation-sensitive file address mapping module 1403 is configured to: obtain storage addresses of target reserved storage areas within the target reserved area; determine storage sequence positions of the target reserved storage areas based on their storage addresses; for each file fragment, determine the storage address of a target reserved storage area whose storage sequence position matches the fragment sequence position of the file fragment as its target position in the target reserved area.

In some embodiments, the internal anti-fragmentation collection module 1404 is configured to: acquire storage addresses of the file fragments; determine offset positions of the file fragments based on their storage addresses and target positions in the target reserved area, where an offset position represents the positional difference between a file fragment's storage address and its target position; for target file fragments with offset positions exceeding a preset threshold, write them to their corresponding target positions in the target reserved area.

In some embodiments, the acquisition module 1401 is configured to determine the target reserved area for the file to be processed based on its file size, cumulative write count, and creation time.

In some embodiments, the acquisition module 1401 is further configured to: determine a modification frequency of the file to be processed within an interval duration between its creation time and the current time, based on the interval duration and cumulative write count; determine the number of reserved storage areas for the file to be processed based on the modification frequency and file size; determine the target reserved area for the file to be processed based on the number of the reserved storage areas for the file to be processed. Specifically, the number of target reserved storage areas is greater than or equal to the required reserved storage areas for the file to be processed.

In some embodiments, the file processing apparatus may further include the following modules.

First determination module 1405: Configured to determine internal fragmentation data of the file to be processed. If the internal fragmentation data is greater than or equal to a preset internal fragmentation threshold, the operation of acquiring the configuration parameter of the file fragments of the file to be processed and the operation of determining the target reserved area for the file to be processed are performed.

In some embodiments, the first determination module 1405 is configured to: obtain storage addresses of the file fragments; determine a dispersion data of the file to be processed based on the storage addresses; determine discontinuity data of the file to be processed based on state difference information between each file fragment and its adjacent fragments; calculate the internal fragmentation data using the dispersion data and discontinuity data.

In some embodiments, the first determination module 1405 is further configured to: compare state information of each file fragment with its adjacent fragments; determine local discontinuity data for each fragment based on the number of adjacent fragments with inconsistent state information; obtain the overall discontinuity degree of the file based on local discontinuity data of the file fragments.

In some embodiments, the first determination module 1405 is configured to: determine fragment sequence positions based on the configuration parameter of the file fragments of the file to be processed; determine storage sequence positions based on storage addresses of the file fragments of the file to be processed; determine the dispersion data using differences between storage sequence positions and fragment sequence positions of the file fragments.

In some embodiments, the file processing apparatus may further include the following modules.

Second determination module 1406: Configured to determine file attribute information of the file to be processed; determining the file type of the file to be processed based on the file attribute information. If the file type is a target type, the operation of acquiring the configuration parameter of the file fragments of the file to be processed and the operation of determining the target reserved area for the file to be processed are performed.

In some embodiments, the file attribute information includes file size, internal fragmentation data, and file write count. The second determination module 1406 includes:
Fragmentation-prone file determination unit: Configured to compare file size with a preset first file size threshold, compare internal fragmentation data with a preset first fragmentation threshold, and compare file write count with a preset file write count threshold. If the file size is greater than or equal to the preset first file size threshold, the internal fragmentation data is greater than or equal to the preset first fragmentation threshold, and the file write count is greater than or equal to the preset file write count threshold, the file type of the file to be processed is determined as fragmentation-prone.

In some embodiments, the file attribute information includes file read size, file read parameter, file size, and internal fragmentation data. The second determination module 1406 includes:
Fragmentation-sensitive file determination unit: Configured to compare file size with a preset second file size threshold, compare file read size with a preset file read size threshold, compare internal fragmentation data with a preset second fragmentation threshold, and compare file read parameters with a preset read parameter. The file read parameters include the number of times the file to be processed has been read according to a target read method. If the file size is greater than or equal to the second preset file size threshold, the file read size is greater than or equal to the preset file read size threshold, the internal fragmentation data is greater than or equal to the preset second fragmentation threshold, and the file read parameters are greater than or equal to the preset read parameter, the file type of the file to be processed is determined as fragmentation-sensitive.

In some embodiments, the file processing apparatus further includes:
Third determination module 1407: Configured to determine file attribute information of the file to be processed, where the file attribute information includes file size and internal fragmentation data. The file type is determined based on the file attribute information. The target type includes at least one of fragmentation-prone file and fragmentation-sensitive file. If the file type is the target type and the internal fragmentation data of the file to be processed is greater than or equal to a preset internal fragmentation threshold, the operation of acquiring the configuration parameter of the file fragments of the file to be processed and the operation of determining the target reserved area for the file to be processed are performed.

The file processing apparatus provided in this embodiment determines fragment sequence positions based on the configuration parameter of file fragments and determines target positions in the target reserved area based on these sequence positions. This ensures that file fragments written into the target reserved area are continuous, thereby mitigating internal file fragmentation issues.

The present disclosure further provides a file processing device. As shown in FIG. 15, which illustrates a structural diagram of the file processing device according to this embodiment:
The file processing device may include a processor 1501 with one or more processing cores, a memory 1502 with one or more computer-readable storage media, a power supply 1503, an input unit 1504, and other components. It is understood that the structure shown in FIG. 15 is not limiting and may include more or fewer components than illustrated, or have different component arrangements.

The processor 1501 serves as the control center of the device, connecting all parts via interfaces and circuits. By executing software programs/modules stored in memory 1502 and invoking stored data, it performs various functions and data processing, enabling overall device monitoring. Optionally, processor 1501 may include one or more processing cores. Preferably, it integrates an application processor (handling OS, UI, applications) and a modem processor (handling wireless communications). The modem processor may alternatively be separate.

The memory 1502 stores software programs and modules. The processor 1501 executes these to perform functional applications and data processing. The memory 1502 includes a program storage area (for OS, functional applications) and a data storage area (for user-created data). It may comprise high-speed random access memory (RAM) and non-volatile memory (e.g., disk storage, flash memory). The memory 1502 may include a memory controller provides processor access to memory 1502 for the processor 1501.

The file processing device may further include a power supply 1503 for providing powers to all components. Preferably, the power supply 1503 connects logically to processor 1501 via a power management system for charging, discharging, and power consumption management. The power supply 1503 may include DC/AC power sources, recharging systems, power fault detection circuits, converters, inverters, or status indicators.

The file processing device may further include an input unit 1504. The input unit 1504 receives input numeric/character information and generates signals (keyboard, mouse, joystick, optical, or trackball) related to user settings and functional control.

Although not shown, the device may include other components such as a display unit. In this embodiment, the processor 1501 loads executable files of application processes into memory 1502 and executes them to implement functions such as:
Acquiring a configuration parameter of a plurality of file fragments in a file to be processed, and determining a target reserved area for the file to be processed;
Determining fragment sequence positions of the plurality of file fragments based on the configuration parameter;
Determining a target position of each of the plurality of file fragments in the target reserved area based on the fragment sequence positions; and
Writing each of the plurality of file fragments to its corresponding target position in the target reserved area.

Those skilled in the art may understand that all or part of the steps in the above methods may be executed by instructions or instruction-controlled hardware. These instructions may be stored in a computer-readable storage medium and loaded/executed by a processor.

Accordingly, the present disclosure provides a storage medium storing multiple instructions executable by a processor to perform steps of any file processing method described herein. For example, the instructions can be executed to perform:
Acquiring a configuration parameter of a plurality of file fragments in a file to be processed, and determining a target reserved area for the file to be processed;
Determining fragment sequence positions of the plurality of file fragments based on the configuration parameter;
Determining a target position of each of the plurality of file fragments in the target reserved area based on the fragment sequence positions; and
Writing each of the plurality of file fragments to its corresponding target position in the target reserved area.

Specific implementations of these operations can be found in preceding embodiments of the present disclosure, and will not be repeated herein.

The storage medium may include ROM (Read Only Memory), RAM (Random Access Memory), magnetic disks, or optical discs.

Since the instructions stored in this medium execute steps of any file processing method herein, they achieve all beneficial effects of these methods, as detailed in prior embodiments.

The file processing method, apparatus, device, and storage medium have been described in detail. Specific examples explain the principles and implementations, with the embodiments serving to clarify the method and core concepts. Based on this disclosure, those skilled in the art may modify specific implementations and scopes of application. Thus, this content should not limit the invention.

## Claims

1. A file processing method, comprising:
acquiring a configuration parameter of a plurality of file fragments in a file to be processed, and determining a target reserved area for the file to be processed;
determining fragment sequence positions of the plurality of file fragments based on the configuration parameter;
determining a target position of each of the plurality of file fragments in the target reserved area based on the fragment sequence positions; and
writing each of the plurality of file fragments into its corresponding target position in the target reserved area.

2. The file processing method according to claim 1,
wherein the configuration parameter comprises a fragment code of the plurality of file fragments;
wherein the determining the fragment sequence positions of the plurality of file fragments based on the configuration parameter comprises:
checking whether there exist multiple first file fragments with identical fragment codes among the plurality of file fragments;
when it is determined there are multiple first file fragments with identical fragment codes, determining a time difference between a write time and a current time for each of the multiple first file fragments;
based on the fragments code, sorting one of the multiple first file fragments which has a minimum time difference and a second file fragment to acquire the fragment sequence positions, wherein the second file fragment belongs to the plurality of file fragments and is different from the multiple first file fragments.

3. The file processing method according to claim 1, wherein the determining the target position of each of the plurality of file fragments in the target reserved area based on the fragment sequence positions comprises:
obtaining storage addresses of a plurality of target reserved storage areas within the target reserved area;
determining storage sequence positions of the plurality of target reserved storage areas based on the storage addresses of the plurality of target reserved storage areas;
for each file fragment among the plurality of file fragments, determining a storage address of one of the plurality of target reserved storage areas whose storage sequence position matches a fragment sequence position of the file fragment as the target position of the file fragment in the target reserved area.

4. The file processing method according to claim 1, after the determining the target position of each of the plurality of file fragments in the target reserved area based on the fragment sequence positions, further comprising:
acquiring storage addresses of the plurality of file fragments;
determining offset positions of the plurality of file fragments based on the storage addresses of the plurality of file fragments and target positions of the plurality of file fragments in the target reserved area, wherein an offset position represents a position difference between a storage address of a file fragment and the target position of the file fragment in the target reserved area;
for a target file fragment whose offset position is larger than a preset offset position, writing the target file fragment into the target position of the target file fragment in the target reserved area.

5. The file processing method according to claim 1, wherein the determining the target reserved area for the file to be processed comprises:
determining the target reserved area of the file to be processed based on file size, cumulative write count, and creation time of the file to be processed.

6. The file processing method according to claim 5, wherein the determining the target reserved area of the file to be processed based on file size, cumulative write count, and creation time of the file to be processed comprises:
based on an interval duration between the creation time of the file to be processed and a current time and the cumulative write count of the file to be processed, determining a modification frequency of the file to be processed within the interval duration;
based on the modification frequency and the file size of the file to be processed, determining a number of reserved storage areas for the file to be processed;
based on the number of reserved storage areas of the file to be processed, determining the target reserved area of the file to be processed, wherein target reserved storage areas in the target reserved area is larger than or equal to the quantity of the reserved storage areas of the file to be processed.

7. The file processing method according to any one of claims 1 to 6, before the acquiring the configuration parameter of the plurality of file fragments in the file to be processed, and determining the target reserved area for the file to be processed, further comprising:
determining internal fragmentation data of the file to be processed;
when the internal fragmentation data of the file to be processed is greater than or equal to a preset internal fragmentation threshold, performing the acquiring the configuration parameter of the plurality of file fragments in the file to be processed, and determining the target reserved area for the file to be processed.

8. The file processing method according to claim 7, wherein the determining internal fragmentation data of the file to be processed comprises:
obtaining storage addresses of the plurality of file fragments of the file to be processed;
based on the storage addresses of the plurality of file fragments, determining dispersion data of the file to be processed;
based on state difference information between the plurality of file fragments and their adjacent file fragments, determining discontinuity data of the file to be processed;
based on the dispersion data and the discontinuity data, determining the internal fragmentation data of the file to be processed.

9. The file processing method according to claim 8, wherein the based on state difference information between the plurality of file fragments and their adjacent file fragments, determining discontinuity data of the file to be processed comprises:
for each file fragment, comparing its state information with its one or more adjacent file fragments;
determining a number of the one or more adjacent file fragments with inconsistent state information as a local discontinuity data of the file fragment;
based on local discontinuity degrees of the plurality of file fragments, obtaining a discontinuity degree of the file to be processed.

10. The file processing method according to claim 8, wherein the based on the storage addresses of the plurality of file fragments, determining dispersion data of the file to be processed comprises:
based on the configuration parameter of the plurality of file fragments of the file to be processed, determining the fragment sequence positions of the plurality of file fragments;
based on storage addresses of the plurality of file fragments of the file to be processed, determining storage sequence positions of the plurality of file fragments;
based on difference information between the storage sequence positions and the fragment sequence positions of the plurality of file fragments, determining the dispersion data of the file to be processed.

11. The file processing method according to any one of claims 1 to 6, before the acquiring the configuration parameter of the plurality of file fragments in the file to be processed, and determining the target reserved area for the file to be processed, further comprising:
determining a file attribute information of the file to be processed;
based on the file attribute information, determining a file type of the file to be processed;
when the file type is a target type, performing the acquiring the configuration parameter of the plurality of file fragments in the file to be processed, and determining the target reserved area for the file to be processed;
wherein the target type comprises at least one selected from: fragmentation-prone file or fragmentation-sensitive file.

12. The file processing method according to claim 11, wherein the file attribute information comprises: file size, internal fragmentation data, and file write count;
wherein the based on the file attribute information, determining a file type of the file to be processed comprises:
comparing the file size with a preset first file size threshold, comparing the internal fragmentation data with a preset first fragmentation threshold, and comparing the file write count with a preset file count threshold;
when the file size is greater than or equal to the preset first file size threshold, the internal fragmentation data is greater than or equal to the preset first fragmentation threshold, and the file write count is greater than or equal to the preset file write count threshold, determining the file type of the file to be processed as the fragmentation-prone file.

13. The file processing method according to claim 11, wherein the file attribute information comprises file read size, file read parameter, file size, and internal fragmentation data;
wherein the based on the file attribute information, determining a file type of the file to be processed comprises:
comparing the file size with a preset second file size threshold, comparing the file read size with a preset file read size threshold, comparing the internal fragmentation data with a preset second fragmentation threshold, and comparing the file read parameter with a preset read parameter, wherein the file read parameter comprises a read count for which the file to be processed has been read according to a target read method;
when the file size is greater than or equal to the second preset file size threshold, the file read size is greater than or equal to the preset file read size threshold, the internal fragmentation data is greater than or equal to the preset second fragmentation threshold, and the file read parameter is greater than or equal to the preset read parameter, determining the file type of the file to be processed as the fragmentation-sensitive file.

14. The file processing method according to any one of claims 1 to 6, before the acquiring the configuration parameter of the plurality of file fragments in the file to be processed, and determining the target reserved area for the file to be processed, further comprising:
determining a file attribute information of the file to be processed, wherein the file attribute information comprises file size and internal fragmentation data;
based on the file attribute information, determining a file type of the file to be processed;
when the file type is a target type and the internal fragmentation data of the file to be processed is greater than or equal to a preset internal fragmentation threshold, performing the acquiring the configuration parameter of the plurality of file fragments in the file to be processed, and determining the target reserved area for the file to be processed;
wherein the target type comprises at least one selected from fragmentation-prone file and fragmentation-sensitive file.

15. The file processing method according to claim 1, wherein the acquiring the configuration parameter of the plurality of file fragments in the file to be processed comprises:
upon receiving a fire write request, triggering a file write operation;
obtaining the file to be processed, traversing the plurality of file fragments of the file to be processed, and acquiring the configuration parameter of the plurality of file fragments.

16. The file processing method according to claim 15, wherein the obtaining the file to be processed, traversing the plurality of file fragments of the file to be processed, and acquiring the configuration parameter of the plurality of file fragments comprises:
when the file write operation is an initial file write: setting a file to be written as the file to be processed, traversing the plurality of file fragments in the file to be processed, and determining the configuration parameter of the plurality of file fragments;
when the file write operation is a file fragment update: acquiring a file fragment to be updated, determining an already written file in structured file system that matches a file identifier of the file fragment to be updated, setting a combination of the file fragment to be updated and the already written file with consistent file identifiers as the file to be processed, traversing the plurality of file fragments in the file to be processed, and determining the configuration parameter of the plurality of file fragments;
when the file write operation is a file update, acquiring a file to be updated, setting the file to be updated as the file to be processed, traversing the plurality of file fragments in the file to be processed, and determining the configuration parameter of the plurality of file fragments.

17. The file processing method according to claim 1, wherein the determining the target reserved area for the file to be processed comprises:
obtaining a file identifier of the file to be processed;
determining a reserved area within structured file system which matches the file identifier of the file to be processed as the target reserved area for the file to be processed.

18. A file processing apparatus, comprising:
an acquisition module, configured to acquire a configuration parameter of a plurality of file fragments in a file to be processed, and determine a target reserved area for the file to be processed;
a fragment sorting module, configured to determine fragment sequence positions of the plurality of file fragments based on the configuration parameter;
a fragmentation-sensitive file address mapping module, configured to determine a target position of each of the plurality of file fragments in the target reserved area based on the fragment sequence positions; and
an internal anti-fragment collection module, configured to: write each of the plurality of file fragments to its corresponding target position in the target reserved area.

19. A file processing device, comprising a memory and a processor, wherein the memory stores application programs, which are executed by the processor to perform operations in the method according to any one of claims 1 to 17.

20. A non-transitory computer storage medium, storing multiple instructions adapted to be loaded by a processor to execute operations in the method according to any one of claims 1 to 17.
